(19) Europäisches Patentamt
European Patent Office
Office européen des brevets

(11) EP 2 067 794 A1

(12) **EUROPEAN PATENT APPLICATION**

(43) Date of publication:
**10.06.2009 Bulletin 2009/24**

(51) Int Cl.:
***C08F 10/06*** *(2006.01)* ***C08F 4/651*** *(2006.01)*

(21) Application number: **07122450.5**

(22) Date of filing: **06.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Borealis Technology OY**
**06101 Porvoo (FI)**

(72) Inventors:
- **Malm, Bo**
  **02110, Espoo (FI)**
- **Tranninger, Michael**
  **4055, Pucking (AT)**

(74) Representative: **Lindinger, Ingrid**
**Borealis Polyolefine GmbH**
**St.-Peter-Straße 25**
**4021 Linz (AT)**

# (54) Use of a Ziegler-Natta procatalyst containing a trans-esterification product of a lower alcohol and a phthalic ester for the production of reactor grade thermoplastic polyolefins with improved paintability

(57) Use of a Ziegler-Natta procatalyst which contains a trans-esterification product of a lower alcohol and a phthalic ester for the production of reactor grade thermoplastic polyolefins with improved paintability, **characterized in that** the procatalyst used has been prepared by

a) reacting a spray crystallized or emulsion solidified adduct of $MgCl_2$ and a $C_1$-$C_2$ alcohol with $TiCl_4$

b) reacting the product of stage a) with a dialkylphthalate of formula (I)

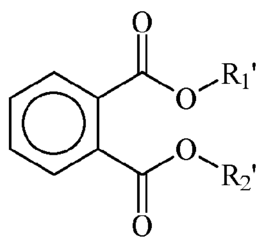

(I)

wherein $R_1'$ and $R_2'$ are independently at least a $C_5$ alkyl under conditions where a transesterification between said $C_1$ to $C_2$ alcohol and said dialkylphthalate of formula (I) takes place to form the internal donor

c) washing the product of stage b) or

d) optionally reacting the product of step c) with $TiCl_4$.,

as well as reactor grade thermoplastic polyolefins prepared by using the above described Ziegler-Natta procatalyst, use of these reactor grade thermoplastic polyolefins, molded articles produced from them and a method to improve paintability and/or surface quality of reactor grade thermoplastic polyolefin resin articles.

EP 2 067 794 A1

## Description

This invention is in the field of thermoplastic polypolyolefins and more specifically reactor grade thermoplastic polyolefins (RTPO).

The invention is further directed to RTPOs having good paint adhesion when molded into articles of manufacture, especially for automotive applications.

Furthermore the invention is related to the use of a special Ziegler-Natta procatalyst, which contains a trans-esterification product of a lower alcohol and a phthalic ester for the production of RTPOs with improved paintability.

## State of the art

Thermoplastic polyolefins (TPO's), which typically comprise polypropylene and an elastomer, have many desirable properties, e.g. lightweight, durability, low costs, etc. that make them an attractive material of construction for many interior and exterior automotive parts. There are two types of TPO's which essentially differ in their method of preparation. The first, which is commonly referred to as "compound grade TPO", is made by physically blending polypropylene with elastomer. The second, which is commonly referred to as "reactor grade TPO" and is more economical to produce than compound grade TPO, is made by first polymerizing propylene to polypropylene and then polymerizing elastomer components, such as ethylene and propylene, in the presence of the polypropylene.

Many of the automotive parts manufactured from TPO's are painted to improve the aesthetic quality of the automotive part. For instance, automobile bumpers formed from TPO's are often painted to match the color of the rest of the automobile's exterior paint.

Various paintable RTPO compositions have already been disclosed.

US 6,284,833 describes a reactor polyolefin polymer composition comprising from about 85 to about 60 wt% isotactic PP as a continuous phase and from 15 to about 40 wt% of an ethylene-containing polymer consisting essentially of an ethylene-propylene copolymer rubber as a discontinuous phase, said ethylene-propylene copolymer containing from about 40 to about 60 wt% ethylene units, based on combined weight of olefin monomers in said copolymer. This reactor olefin polymer can be an in-reactor thermoplastic polyolefin prepared by sequential polymerization.

According to US 6,284,833 articles molded from this composition have an improved paintability while retaining a good balance of mechanical properties including stiffness and toughness. These articles can be used for automotive uses.

The RTPO resins may be prepared by a variety of methods described in the art. No catalysts are specified.

US 2005/0075458 describes a paintable impact copolymer composition, in which a polypropylene homopolymer component and an ethylene-propylene rubber (EPR) are blended in-reactor.

The composition comprises from about 5 wt% to about 50 wt% of a xylene-soluble portion and from about 50 wt% to about 95 wt% xylene-insoluble portion wherein:

the ratio of the weight average molecular weight of said xylene-soluble portion to that of said xylene-insoluble portion is from 0.5 to about 1.8;
the intrinsic viscosity of said xylene-soluble portion is from about 0.5 to about 7.0 dL/g and
said xylene-soluble portion comprising from about 30 to about 70 mole percent ethylene units;
said impact copolymer composition being produced by in-reactor blending.

Molded articles manufactured with this composition display according to US 2005/0075458 improved paintability and also possess mechanical properties established in the art as desirable for impact copolymers in a wide variety of uses. These articles can be used for bumper fascia, deflectors, shields, cladding and cowls for automobiles.

There are no details given in the description of US 2005/0075458 regarding the processes and catalysts used for producing this paintable impact copolymer composition.

US 6,107,404 describes a paintable, reactor grade thermoplastic polyolefin comprising a reactor blend of elastomer and polypropylene, which can be used in the manufacture of automotive parts.

The elastomer is present in an amount of about 10 to about 35 wt% based on the weight of the TPO, the elastomer comprising about 40 to 60 wt% polyethylene, based on the weight of elastomer, and the TPO having a viscosity ratio of polypropylene to elastomer of about 50:1 to about 700:1.

These reactor grade thermoplastic polyolefins are preferably prepared by first polymerizing propylene monomer in a reactor vessel to form the polypropylene homopolymer, and then polymerizing the elastomer components (i.e., ethylene monomer and propylene or other polyolefin monomers) in the presence of the polypropylene homopolymer.

Further it is disclosed that the polymerization of propylene occurs in a manner which is well known in the art and that the catalyst type, residence time, catalyst amount, hydrogen amount and amount, feed and pressure of propylene all may influence the Mn of the polypropylene.

The catalyst used according to US 6,107,404 is preferably a catalyst complex, consisting of a transition metal halide of the high activity Ziegler-type. Particularly preferred catalysts include those described in US 4,127,504; 4,330,649; 4,543,400 and 4,547,522. Alternatively, a catalyst system comprising at least one each of a catalyst, a co-catalyst and a modifier, could be used. An especially preferred Ziegler catalyst system comprises about 40 ppm titanium trichloride, about 420 ppm diethyl aluminium chloride co-catalyst and about 27 ppm methyl methacrylate modifier and is commercially available from Mitsui Petrochemical CO. Another preferred catalyst system comprises a particle form, magnesium halide supported, titanium halide based catalyst with an alkyl-aluminium based co-catalyst and is commercially available under the trade name TK-220 from Mitsui Petrochemical CO.

US 6,610,408 describes a TPO blend which includes a polyolefin component of a substantially crystalline polymer in an amount of about 30 to 98 wt% of the blend and an elastomer of a sequentially polymerized ethylene alpha-olefin copolymer having a multimodal distribution of at least one of molecular weight, density of alpha-olefin monomers, and being present in an amount of about 2 to 70 wt% of the blend.

The described TPO blends have excellent paintability according to US 6,610,408, and a broad range of stiffness values as well as high impact and tensile strength which make them suitable for automotive applications.

The blend described is no in-situ blend. Furthermore no special catalyst is defined.

Accordingly, although much development work has been done in the field of RTPOs with improved paintability, there remains a continuing search for alternative or improved RTPOs with desirable properties, such as improved paint adhesion, improved surface quality, e.t.c..

For this reason there is still a need for RTPOs, which show superior paint adhesion and improved surface quality.

It was therefore an object of the invention to provide RTPOs, which show superior paint adhesion and improved surface quality.

This object was achieved by using a special Ziegler-Natta procatalyst which contains a trans-esterification product of a lower alcohol and a phthalic ester. Surprisingly this special Ziegler-Natta procatalyst can be used for the production of a great variety of RTPOs with improved paintability and improved surface quality, like RTPOs on the basis of a polypropylene matrix including unimodal or multimodal rubber compositions, nucleated or non-nucleated RTPOs, with different multi-stage processes, like Borstar® from Borealis or Spheripol® from Basell.

Thus in a first aspect, the present invention is therefore directed to the use of a Ziegler-Natta procatalyst which contains a trans-esterification product of a lower alcohol and a phthalic ester for the production of reactor grade thermoplastic polyolefins with improved paintability, characterized in that the procatalyst has been prepared by

a) reacting a spray crystallized or emulsion solidified adduct of $MgCl_2$ and a C1-$C_2$ alcohol with $TiCl_4$
b) reacting the product of stage a) with a dialkylphthalate of formula (I)

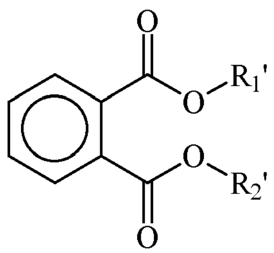

(I)

wherein $R_1$' and $R_2$' are independently at least a $C_5$ alkyl
under conditions where a transesterification between said $C_1$ to $C_2$ alcohol and said dialkylphthalate of formula (I) takes place to form the internal donor
c) washing the product of stage b) or
d) optionally reacting the product of step c) with $TiCl_4$.

According to the invention a special Ziegler-Natta procatalyst is used for the production of RTPOs with improved paintability.

In a further aspect of the invention the use of this special Ziegler-Natta procatalyst also improves the surface quality of the RTPOs produced in the presence of it.

The procatalyst composition is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6 is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanised carrier, followed by the steps of

- adding to said titanised carrier

  (i) a dialkylphthalate of formula (I) with $R_1$' and $R_2$' being independently at least a $C_5$ alkyl, like at least a $C_8$ alkyl, or preferably
  (ii) a dialkylphthalate of formula (I) with $R_1$' and $R_2$' being the same and being at least a $C_5$ alkyl, like at least a $C_8$ alkyl
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
  to form a first product

- subjecting said first product to suitable transesterification conditions, i.e. at a temperature between 130 to 150°C such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

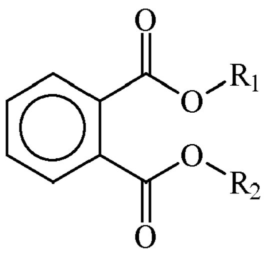

(II)

  with $R_1$ and $R_2$ being methyl or ethyl, preferably ethyl, being the internal donor and
- recovering said transesterification product as the procatalyst composition.

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is then used as the catalyst carrier and reacted to the procatalyst useful in the present invention as described in WO 92/19658 and WO 92/19653.

In the next step the crystallized carrier is reacted with $TiCl_4$ to form a titanised carrier.

A dialkylphthalate of formula (I) is then added to this titanised carrier.

The alkoxy group of the phthalic acid ester used comprises at least 5 carbon atoms and may be different or the same. Preferably the alkoxy group of the phthalic acid ester used comprises at least 8 carbon atoms. More preferably the alkoxy groups $R_1$' and $R_2$' are the same.

Still more preferably a dialkylphthalate of formula (I) selected from the group consisting of propylhexylphthalate (PrHP), dioctylphthalate (DOP), di-iso-decylphthalate (DIDP), and ditridecylphthalate (DTDP) is used, yet most preferably the dialkylphthalate of formula (I) is a dioctylphthalate (DOP), like di-iso-octylphthalate or diethylhexylphthalate, in particular diethylhexylphthalate.

When adding the dialkylphthalate of formula (I) it is very likely that an adduct of all the components is produced.

This adduct is then transesterified at a temperature above 100°C and advantageously between 130 to 150°C.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5% by weight of titanium at the most,

preferably 2.2% by weight at the most and more preferably 2.0 % by weight at the most. Its donor content is preferably between 4 to 12% by weight and more preferably between 6 and 10 % by weight.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BC-1 catalyst of Borealis (prepared according to WO92/19653 as disclosed in WO 99/24479; especially with the use of dioctylphthalate as dialkylphthalate of formula (I) according to WO 92/19658) or the catalyst Polytrack 8502, commercially available from Grace.

For the production of reactor grade thermoplastic polyolefins with improved paintability according to the invention the special Ziegler-Natta procatalyst is advantageously used in the presence of an organometallic cocatalyst. Accordingly it is preferred to select the cocatalyst from the group consisting of trialkylaluminium, like triethylaluminium (TEA), dialkyl aluminium chloride and alkyl aluminium sesquichloride.

Furthermore it is advantageous to use an external donor.

Preferably the external donor has the formula **III**

$$R_3nR_4mSi(OR_5)z \qquad \text{(III)}$$

wherein

$R_3$ and $R_4$ are identical or different hydrocarbon residues,
$R_5$ is methyl or ethyl
z is 2 or 3, preferably 2
m is 0 or 1
n is 0 or 1
with the proviso that n + m +z = 4.

Preferably $R_3$ and $R_4$ are independently selected from the group consisting of linear aliphatic hydrocarbon group, branched aliphatic hydrocarbon group, cyclic aliphatic hydrocarbon group and aromatic group. It is in particular preferred that $R_3$ and $R_4$ are independently selected from the group consisting of methyl, ethyl, propyl, butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. In a preferred embodiment the external donor has the formula IV

$$R_3R_4Si(OR_5)_2 \qquad \text{(IV)}$$

wherein

$R_3$ and $R_4$ are identical or different hydrocarbon residues,
with the proviso that

(a) $R_3$ is a branched aliphatic hydrocarbon group or cyclic aliphatic hydrocarbon group, preferably selected from the group consisting of iso-propyl, iso-pentyl, tert.-butyl, tert.-amyl, neopentyl, cyclopentyl, cyclohexyl, methylcyclopentyl and cycloheptyl, and
(b) $R_4$ is selected from the group consisting of linear aliphatic hydrocarbon group, branched aliphatic hydrocarbon group and cyclic aliphatic hydrocarbon group, preferably selected from the group consisting of methyl, ethyl, propyl, butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

Accordingly it is preferred that the external donor is selected from the group consisting of di-iso-propyldiethoxysilane (DIPDES), cyclohexylmethyldiethoxysilane (CHMDES), dicyclopentyldimethoxysilane (D-donor), cyclohexylmethyl-dimethoxysilane (C-donor) and dicyclopentadienyldiethoxysilane (DCPDES). More preferably an external donor selected from C-donor, D-donor and di-iso-propyldiethoxysilane (DIPDES) is used and most preferably the D-donor is used.

Especially good results are achieved with a catalyst system comprising

(a) a procatalyst composition being produced as defined in the patent applications WO 92/19653, WO 92/19658 and EP 0 491 566 A2
(b) an external donor being an methoxy- or ethoxy-substituted silane and
(c) optionally a cocatalyst.

Thus it is preferred that the catalyst system comprises

(a) a procatalyst composition comprising titanium, magnesium, chlorine and internal donor, wherein said internal donor comprises

(i) a dialkylphthalate of formula (II),

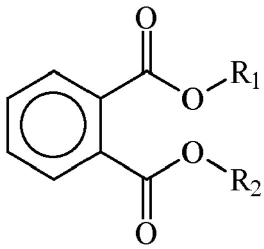

(II)

wherein $R_1$ and $R_2$ are independently selected from methyl or ethyl, preferably $R_1$ and $R_2$ are the same, i.e. define the same alkyl residue, or preferably
(ii) diethylphthalate

(b) an external donor

(i) as defined by formula III, wherein $R_3$ and $R_4$ are preferably independently selected from the group consisting of linear aliphatic hydrocarbon group, branched aliphatic hydrocarbon group, cyclic aliphatic hydrocarbon group and aromatic group, more preferably independently selected from the group consisting of methyl, ethyl, propyl, butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl,
or more preferably
(ii) as defined by formula IV (and the definition of $R_3$ and $R_4$ thereto)
or still more preferably
(iii) being selected from the group consisting of di-iso-propyldiethoxysilane (DIPDES), cyclohexylmethyldiethoxysilane (CHMDES), dicyclopentyldimethoxysilane (D-donor), cyclohexylmethyl-dimethoxysilane (C-donor) and dicyclopentadienyldiethoxysilane (DCPDES)
or yet more preferably
(iv) being dicyclopentyldimethoxysilane (D-donor)

and
(c) optionally a cocatalyst selected from the group consisting of trialkylaluminium, like triethylaluminium (TEA), dialkyl aluminium chloride and alkyl aluminium sesquichloride.

So the most preferred catalyst system comprises

a) a procatalyst composition comprising titanium, magnesium, chlorine and diethylphthalate as internal donor, prepared as disclosed above,
b) dicyclopentyldi-methoxysilane as external donor and
c) optionally triethylaluminium as cocatalyst.

In one preferred embodiment, the Ziegler-Natta procatalyst can be modified by polymerising a vinyl compound in the presence of the catalyst system, comprising the special Ziegler-Natta procatalyst, an external donor and optionally a cocatalyst, which vinyl compound has the formula:

$$CH_2=CH-CHR_6R_7$$

wherein $R_6$ and $R_7$ together form a 5- or 6-membered saturated, unsaturated or aromatic ring or independently represent an alkyl group comprising 1 to 4 carbon atoms, and the modified catalyst is used for the preparation of the polymer composition. The polymerised vinyl compound can act as a nucleating agent.

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

The reactor grade thermoplastic polyolefins with improved paintability according to the invention may be produced by a variety of methods described in the art.

The RTPO of the present invention is produced by multistage process polymerization such as bulk polymerization, gas phase polymerization, slurry polymerization, solution polymerization or combinations thereof.

One skilled in the art is aware of the various possibilities and polymerization reactor systems to produce RTPOs.

Thus, the polymerization system can comprise one or more conventional stirred slurry reactors and/or one or more gas phase reactors. Preferably the reactors used are selected from the group of loop and gas phase reactors and, in particular, the process employs at least one loop reactor and at least one gas phase reactor. It is also possible to use several reactors of each type, e.g. one loop and two or three gas phase reactors, or two loops and one or two gas phase reactors, in series.

Preferably the process comprises also a prepolymerization with the chosen catalyst system comprising the special Ziegler-Natta procatalyst, optionally the cocatalyst and an external donor.

A slurry reactor designates any reactor, such as a continuous or simple batch stirred tank reactor or loop reactor, operating in bulk or slurry and in which the polymer forms in particulate form. "Bulk" means a polymerization in reaction medium that comprises at least 60 wt-% monomer. According to a preferred embodiment the slurry reactor comprises a bulk loop reactor.

"Gas phase reactor" means any mechanically mixed or fluid bed reactor. Preferably the gas phase reactor comprises a mechanically agitated fluid bed reactor with gas velocities of at least 0.2 m/sec.

The particularly preferred embodiment of the invention comprises carrying out the polymerization in a process comprising either a combination of one loop and two or three gas phase reactors or a combination of two loops and one or two gas phase reactors.

A preferred multistage process is a slurry-gas phase process, such as developed by Borealis and known as the Borstar® technology. In this respect, reference is made to EP 0 887 379 A1, WO 2004/000899, WO 2004/111095, WO 99/24478, WO 99/24479 and WO 00/68315 incorporated herein by reference.

A further suitable slurry-gas phase process is the Spheripol® processes of Basell and the Mitsui Hypol® process.

Preferably the reactor grade thermoplastic polyolefins with improved paintability according to the invention are produced by using the special Ziegler-Natta procatalysts, as described above, in the Spheripol® or in the Borstar®PP process, more preferably in the Borstar®PP process.

RTPO resins produced according to the invention comprise from about 80 to about 50 wt% polypropylene matrix having dispersed therein from about 20 to 50 wt% rubber component, based on the combined weight of matrix and rubber, said rubber component comprising an ethylene-propylene copolymer having an ethylene content in the range of from about 10 to 70 wt%, based on the combined weight of olefin monomers in the rubber component.

Preferably the RTPOs contain 25 to 45 wt% of the rubber component.

The rubber component preferably has an ethylene content in the range of from about 15 to 50 wt%, based on the combined weight of olefin monomers in the rubber component. The rubber component may be unimodal or bimodal.

The expression "unimodal" or "bimodal" used herein refers to the modality of the rubber respectively of the polymer, i.e. the form of its molecular weight distribution curve, which is the graph of the molecular weight fraction as a function of its molecular weight. As explained herein, the polymer respectively rubber components of the present invention are produced in a sequential step process, using reactors in serial configuration and operating at different reaction conditions. As a consequence, each fraction prepared in a specific reactor will have its own molecular weight distribution. When the molecular weight distribution curves from these fractions are superimposed to obtain the molecular weight distribution curve of the final polymer, that curve may show two or more maxima or at least be distinctly broadened when compared with curves for the individual fractions.

The polypropylene matrix may contain low amounts of ethylene, preferably the amount of ethylene is below 2 wt% based on the weight of the matrix.

Furthermore RTPO resins produced according to the invention comprise a polypropylene matrix with an XS of $\leq 3.0$, preferably $\leq 2.5$ and more preferably $\leq 2.0$.

One preferred multistage process may therefore comprise the steps of:

- producing a polypropylene polymer matrix in the presence of the chosen catalyst system comprising the special Ziegler-Natta procatalyst, an external donor and optionally the cocatalyst in at least one slurry reactor
- transferring the slurry reactor product into a first gas phase reactor (GPR)
- producing a first ethylene/propylene-copolymer in the polymer matrix in the presence of the catalyst system in said first GPR
- transferring the first GPR product into a $2^{nd}$ GPR

- producing a second ethylene/propylene-copolymer in the polymer matrix in the presence of catalyst system in said $2^{nd}$ GPR
- recovering the polymer product for further processing,

said $1^{St}$ and $2^{nd}$ ethylene/propylene mixtures having different composition ratios, so that a bimodal rubber composition is obtained.

A further preferred multistage process may comprise the steps of:

- producing a polypropylene polymer matrix in the presence of the chosen catalyst system comprising the special Ziegler-Natta procatalyst, an external donor and optionally the cocatalyst in at least one slurry reactor
- transferring the slurry reactor product into a first gas phase reactor (GPR),
- wherein the slurry reactor product is further polymerized in the presence of the catalyst system in said first GPR
- transferring the first GPR product into a $2^{nd}$ GPR
- producing a ethylene/propylene-copolymer in the polymer matrix in the presence of catalyst system in said $2^{nd}$ GPR
- optionally transferring the $2^{nd}$ GPR product into a $3^{rd}$ GPR and producing a second ethylene/propylene-copolymer in the polymer matrix in the presence of catalyst system in said $3^{rd}$ GPR, said $1^{st}$ and $2^{nd}$ ethylene/propylene mixtures having different composition ratios and
- recovering the polymer product for further processing,

yielding a polypropylene polymer matrix containing a unimodal rubber composition if 2 GPRs are used or containing a bimodal rubber composition if 3 GPRs are used.

The current invention also provides reactor grade thermoplastic polyolefins with improved paintability, prepared by using the special Ziegler-Natta procatalyst which contains a trans-esterification product of a lower alcohol and a phthalic ester as defined above, for the multi-stage polymerization processes as disclosed above.

Preferably the reactor grade thermoplastic polyolefins with improved paintability according to the invention, are prepared by using the catalyst system comprising the special Ziegler-Natta procatalyst, dicyclopentyldi-methoxysilane as external donor and optionally triethylaluminium as cocatalyst.

More preferably the reactor grade thermoplastic polyolefins with improved paintability according to the invention comprise a polypropylene matrix with an XS of $\leq$ 3.0, preferably $\leq$ 2.5 and more preferably $\leq$ 2.0.

The RTPOs according to the invention may comprise conventional adjuvants, such as additives, fillers and reinforcing agents or additional impact modifiers.

The following are optional additives: nucleating agents, process and heat stabilisers, UV stabilizers, slip agents, antistatic agents, pigments and other colouring agents including carbon black. Depending on the type of additive, these may be added in an amount of 0.001 to 10 wt.%, based on the weight of the RTPO.

In a preferred embodiment, the polymer composition includes 0.05 to 3 wt% based on the weight of the polymer composition, of one or more alpha-nucleating agents such as talc, polymerised vinyl compounds such as polyvinylcyclohexane, dibenzylidene sorbitol, sodium benzoate, Methylen-bis(4,6-di-t-butylphenyl)-phosphate sodium salt (NA-11), aluminium hydroxyl-bis[2,4,8,10-tetrakis(1,1-dimethylethyl)-6-hydroxy-12H-dibenzo-[d,g]-dioxa-phoshocin-6-oxidato] (NA-21) and di(alkyl-benzylidene)sorbitol or mixtures thereof. The alpha-nucleating agent is usually added in small amounts of 0.0001 to 1 wt.%, more preferably 0.001 to 0.7 wt.%. Since talc can act both as a nucleating agent and as filler, it can be added in higher amounts. When added as a nucleating agent, talc is preferably added in an amount of 0.05 to 3 wt%, more preferably 0.1 to 2 wt.%, most preferably less than 1 wt.%, based on the weight of the polymer composition. Further details about these nucleating agents can be found e.g. in WO 99/24479 and WO 99/24501.

Molding resin formulations comprising the RTPO produced according to the invention may further comprise 5 to 60 wt% of one or more particulate of fibrous reinforcing fillers such as glass fiber or carbon fiber, graphite, carbon black or the like, or fillers such as clay, talc and mineral fillers and the like commonly employed in the trade for the manufacture of molded articles and extruded goods. Stabilizers, antioxidants, lubricants, colorants and the like may also be employed in amounts and using processes and procedures as commonly practiced in the resin compounding art.

In the preferred embodiments, the additives are added to the RTPO, which is collected from the final reactor of the series of reactors. Preferably, these additives are mixed into the composition prior to or during the extrusion process in a one-step compounding process. Alternatively, a master batch may be formulated, wherein the RTPO is first mixed with only some of the additives.

For mixing, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles and products of the inventive RTPOs.

RTPO compositions according to the invention may be pelletized and compounded using any of the variety of compounding and blending methods well known and commonly used in the resin compounding art.

The compositions of the current invention are preferably used for the production of moulded articles, preferably injection moulded articles. Even more preferred is the use for the production of automotive parts, like bumpers, spoilers, fenders, body panels, side bump strips and the like.

The current invention also provides articles comprising the inventive RTPOs with improved paintability. Preferably, these articles are produced by injection moulding.

Surprisingly, it was found that the molded articles manufactured with the RTPO resins prepared according to the invention display improved paintability and surface quality.

Paintability is understood in the art to mean exhibiting a high degree of paint adhesion, as measured in various adhesion tests.

"Tigerstripes" respectively "tigerskin" phenomenon is a common problem for surface quality respectively appearance in plastic industry and describes a specific surface defect. Tigerstripes, as known in the plastic industry, describe a visible periodic inhomogenity in surface gloss. Mostly these are alternating dull (or rough) and glossy (or smooth) areas on the surface of injection molded or extruded plastic parts, which surface should be glossy (or smooth) all over.

The RTPO components according to the invention may be painted by any conventional known method and with any conventional paint system.

The invention may also be characterized as a method for improving paintability and/or surface quality of RTPO resin articles, the method comprising providing an article molded from a RTPO resin, produced in the presence of the above described special procatalyst.

**Examples:**

**Methods:**

**Melt Flow Rate**

Unless otherwise specified, the melt flow rate is measured as the $MFR_2$ in accordance with ISO 1133 (230°C, 2.16 kg load) for polypropylene and is indicated in g/10 min. The MFR is an indication of the flowability, and hence the processability, of the polymer. The higher the melt flow rate, the lower the viscosity of the polymer.

**Comonomer content** is measured with Fourier transform infrared spectroscopy (FTIR) calibrated with $^{13}C$-NMR. When measuring the ethylene content in polypropylene, a thin film of the sample (thickness about 250 mm) was prepared by hot-pressing. The area of $-CH_2-$ absorption peak (800-650 $cm^{-1}$) was measured with Perkin Elmer FTIR 1600 spectrometer. The method was calibrated by ethylene content data measured by $^{13}C$-NMR.

**Flexural modulus and Flexural Stress at 3,5% strain** were measured according to ISO 178 by using injection molded test specimens as described in EN ISO 1873-2 (80 x 10 x 4 mm)

**Density:**

Density of the polymer was measured according to ISO 1183/D.

**Xylene solubles and Amorphous phase**

The xylene soluble fraction (XS) as defined and described in the present invention is determined as follows: 2.0 g of the polymer are dissolved in 250 mm p-xylene at 135°C under agitation. After 30 minutes, the solution was allowed to cool for 15 minutes at ambient temperature and then allowed to settle for 30 minutes at 25 ± 0.5 °C. The solution was filtered with filter paper into two 100 mm flasks. The solution from the first 100 mm vessel was evaporated in nitrogen flow and the residue dried under vacuum at 90 °C until constant weight is reached. The xylene soluble fraction (percent) can then be determined as follows:

$$XS\% = (100 \times m_1 \times v_0)/(m_0 \times v_1),$$

wherein $m_0$ designates the initial polymer amount (grams), $m_1$ defines the weight of residue (grams), $v_0$ defines the initial volume (milliliter) and $V_1$ defines the volume of the analysed sample (milliliter).

The solution from the second 100 ml flask was treated with 200 ml of acetone under vigorous stirring. The precipitate was filtered and dried in a vacuum oven at 90 °C. This solution can be employed in order to determine the

amorphous part of the polymer (AM) using the following equation:

$$AM\% = (100 \times m_1 \mathrm{X} v_0)/(m_0 \times v_1)$$

wherein $m_0$ designates the initial polymer amount (grams), $m_1$ defines the weight of residue (grams), $v_0$ defines the initial volume (milliliter) and $V_1$ defines the volume of the analysed sample (milliliter). The disperse phase of the rubber corresponds to the amount of amorphous phase in the heterophasic polymer.

**The intrinsic viscosity (IV)**

The intrinsic viscosity (IV) value increases with the molecular weight of a polymer. The IV values e.g. of the amorphous phase were measured according to ISO 1628/1 (October 1999) in Decalin at 135°C.

**Tensile strength and tensile modulus**

The tensile strength, including tensile stress at yield and strain at yield, were measured according to ISO 572-3. The tensile modulus was measured according to ISO 572-3 at 1 mm/min and 23°C. Test specimens as described in EN ISO 1873-2 (80 x 10 x 4 mm) were used.

**Preparation of base resins A, B and C according to the invention and of comparative base resins D and E**

The inventive and comparative examples were prepared in a connected series of reactors.
Table 1 summarises the relevant properties of the base resins A, B, and C and of comparative examples D and E

**Base resin A**

The Base resin A was produced in a plant having a prepolymerization reactor, a loop reactor and two fluid bed gas-reactors connected in series. The catalyst used in the polymerization was a Vinylcyclohexyl (VHC)-modified BC-1 catalyst from Borealis (prepared according to Example 1 of WO99/24479, with DOP as dialkylphthalat of the formula (I) and ethanol as the alcohol), the cocatalyst was Triethylaluminium (TEA) and as an external donor dicyclopentyl dimethoxy silane (Donor D) was used.
After a first pre-polymerisation step the modified catalyst was fed to the slurry reactor, where the polymerisation of the polypropylene homopolymer matrix phase was initiated. The slurry phase loop reactor was then followed by a first gas phase reactor in series, in which the matrix phase of the polypropylene homopolymer was completed. The polymerisation temperature in the slurry phase loop reactor was 72 °C, whereas the temperature in the first gas phase reactor was 80°C. After transfer to a second gas phase reactor the elastomeric rubber disperse phase was produced by copolymerisation of propylene with ethylene comonomer. The operating temperature in the second gas phase reactor was 80 °C.
The split between loop, 1st GPR and 2nd GPR was: 41%:27%:32%
Base resin A contained a unimodal rubber.

| Reaction conditions: | |
|---|---|
| **1) Prepolymerization** | |
| **T[°C]** | 30 |
| **TEA/D [mol/mol]** | 13 |
| **TEA/Ti [mol/mol]** | 75 |
| **$TEA/C_3$ [g/kg]** | 0,18 |
| | |
| **2) Loop** | |
| **Reactor-T [°C]** | 72 |
| **Pressure [bar]** | 55 |
| **$MFR_2$ [g/10 min]** | 55 |

(continued)

| | |
|---|---|
| **2) Loop** | |
| **Density [kg/m$^3$]** | 523 |
| **$H_2/C_3$ [mol/kmol]** | 10,5 |
| **XS** [wt%] | 0-3 |
| | |
| **3) 1st Gas phase reactor** | |
| **Reactor-T [°C]** | 80 |
| **Pressure [bar]** | 22 |
| **$H_2/C_3$ [mol/kmol]** | 102,7 |
| **$C_2$** [wt%] | 0 |
| **$MFR_2$ [g/10 min]** | 55 |
| | |
| **4) 2nd Gas phase reactor** | |
| **Reactor-T [°C]** | 85 |
| **Pressure [bar]** | 21 |
| **$H_2/C_2$ [mol/kmol]** | 90 |
| **$C_2/C_3$ [mol/kmol]** | 560 |
| **$C_2$** [wt%] | 11-14 |
| **$MFR_2$ [g/10 min]** | 11 |

**Base resin B**

The Base resin B was produced in a plant having a prepolymerization reactor, a loop reactor and three fluid bed gas-reactors connected in series. The catalyst used in the polymerization was the BC-1 catalyst from Borealis (prepared according to EP 0 591 224 with DOP as dialkylphthalat of the formula (I) and ethanol as alcohol), the cocatalyst was Triethylaluminium (TEA) and as an external donor dicyclopentyl dimethoxy silane (Donor D) was used.

After a first pre-polymerisation step the catalyst system was fed to the slurry reactor, where the polymerisation of the polypropylene homopolymer matrix phase was initiated. The slurry phase loop reactor was then followed by a first gas phase reactor in series, in which the matrix phase of the polypropylene homopolymer was completed. The polymerisation temperature in the slurry phase loop reactor was 80 °C, whereas the temperature in the first gas phase reactor was 85°C. After transfer to a second gas phase reactor a first elastomeric rubber disperse phase was produced by copolymerisation of propylene with ethylene comonomer. The operating temperature in the second gas phase reactor was 85 °C. The reaction product of the second gas phase reactor was then transferred into a third gas phase reactor wherein the second ethylene/propylene copolymer was produced.

The split between loop and 1st GPR (matrix phase) was: 72%:28%

The split between 2nd GPR and 3rd GPR (rubber phase) was: 55%:45%

Base resin B contained a bimodal rubber.

Reaction conditions:

| | |
|---|---|
| **1) Prepolymerization** | |
| **T[°C]** | 30 |
| **TEA/D [mol/mol]** | 9,8 |
| TEA/Ti [mol/mol] | 193 |
| **TEA/$C_3$ [g/kg]** | 0,05 |
| **2) Loop** | |
| **Reactor-T [°C]** | 80 |
| **Pressure [bar]** | 55 |
| **$MFR_2$ [g/10 min]** | 61 |
| **$H_2/C_3$ [mol/kmol]** | 17,3 |
| **XS** [wt%] | 1 ,8 |

(continued)

| | |
|---|---|
| **3) 1st Gas phase reactor** | |
| **Reactor-T [°C]** | 85 |
| **Pressure [bar]** | 33 |
| **$H_2/C_3$ [mol/kmol]** | 105 |
| **$C_2$ [wt%]** | 0 |
| **$MFR_2$ [g/10 min]** | 66 |
| **XS** [wt%] | 1 ,8 |
| | |
| **4) 2nd Gas phase reactor** | |
| **Reactor-T [°C]** | 85 |
| **Pressure [bar]** | 31 |
| **$H_2/C_2$ [mol/kmol]** | 135 |
| **$C_2/C_3$ [mol/kmol]** | 473 |
| **AM [wt%]** | 19,9 |
| **$C_2$ of AM** [wt%] | 37 |
| **$C_2$** [wt%] | 8,8 |
| **XS** [wt%] | 19,4 |
| **$MFR_2$ [g/10 min]** | 28,2 |
| **5) 3rd Gas phase reactor** | |
| **Reactor-T [°C]** | 88 |
| **Pressure [bar]** | 30,5 |
| **$H_2/C_2$ [mol/kmol]** | 15 |
| **$C_2/C_3$ [mol/kmol]** | 478 |
| **AM [wt%]** | 32,4 |
| **$C_2$ of AM** [wt%] | 39,3 |
| **$C_2$** [wt%] | 13,1 |
| **XS** [wt%] | 33,9 |
| $MFR_2$ [g/10 min] | 13,5 |

**Base resin C**

The Base resin C was produced in a plant having a prepolymerization reactor, a loop reactor and two fluid bed gas-reactors connected in series. The catalyst used in the polymerization was the BC-1 catalyst from Borealis (prepared according to EP 0 591 224 with DOP as dialkylphthalat of the formula (I) and ethanol as alcohol), the cocatalyst was Triethylaluminium (TEA) and as an external donor dicyclopentyl dimethoxy silane (Donor D) was used.

After a first pre-polymerisation step the catalyst system was fed to the slurry reactor, where the polymerisation of the polypropylene homopolymer matrix phase was performed. The slurry phase loop reactor was then followed by a first gas phase reactor in series, in which a first elastomeric rubber disperse phase was produced by copolymerisation of propylene with ethylene comonomer. The polymerisation temperature in the slurry phase loop reactor was 65°C, whereas the temperature in the first gas phase reactor was 80°C. After transfer to a second gas phase reactor the second ethylene/propylene copolymer was produced. The operating temperature in the second gas phase reactor was 80°C.

The split between loop, 1st GPR and 2nd GPR was: 66%:18%:16%

Base resin C contained a bimodal rubber.

| Reaction conditions: | |
|---|---|
| **1) Prepolymerization** | |
| **T [°C]** | 30 |
| **TEA/D [mol/mol]** | 12 |
| **$TEA/C_3$ [g/kg]** | 0,23 |

(continued)

| | |
|---|---|
| **2) Loop** | |
| **Reactor-T [°C]** | 65 |
| **Pressure [bar]** | 33,5 |
| **$MFR_2$** [g/10 min] | 56 |
| **$H_2/C_3$ [mol/kmol]** | 6800ppm |
| **$C_2$** [wt%] | 0,57 |
| **XS** [wt%] | 2,2 |
| **3) 1st Gas phase reactor** | |
| **Reactor-T [°C]** | 80 |
| **Pressure [bar]** | 9,8 |
| **$H_2/C_3$ [mol/kmol]** | 0,162 |
| **$C_2$** [wt%] | 9,8 |
| **AM [wt%]** | 1,5 |
| **$C_3$/EPR [wt%]** | 56 |
| **IV/X total [dl/g]** | 2,05 |
| **$MFR_2$** [g/10 min] | 25,8 |
| **XS** [wt%] | 18,7 |
| **4) 2nd Gas phase reactor** | |
| **Reactor-T [°C]** | 80 |
| **Pressure [bar]** | 13 |
| **$H_2/C_3$ [mol/kmol]** | 0,029 |
| **$C_2$** [wt%] | 16,5 |
| **AM [wt%]** | 1,9 |
| **$C_3$/EPR [wt%]** | 56,5 |
| **IV/X total [dl/g]** | 2,76 |
| **$MFR_2$ [g/10 min]** | 8,7 |
| **XS** [wt%] | 31,4 |

**Comparative resin D**

The Comparative resin D was produced in a plant having a prepolymerization reactor, one loop reactor and two gas phase reactors connected in series as described for Base resin C. The catalyst used in the polymerization was the ZN104 catalyst commercially available from Basell, the cocatalyst was Triethylaluminium (TEA) and as an external donor dicyclopentyl dimethoxy silane (Donor D) was used.

The Comparative resin D contained a bimodal rubber.

**Table 1: Analytics and mechanics of base and comparative resins**

| RTPO | A | B | C | D |
|---|---|---|---|---|
| **$C_2$ total[mol%]** | 18,5 | 19,4 | 23,7 | 22,2 |
| **XS** [wt%] | 28,4 | 29 | 31,8 | 32 |
| **$C_2$/XS [mol%]** | 45,8 | 48,6 | 48,4 | 46,5 |
| **IV/XS [dl/g]** | 3,5 | 3,51 | 3,69 | 3,08 |
| **MFR 230°C/2,16kg [g/10']** | 11,5 | 13,2 | 10 | 10,7 |
| **Flexural Modulus [MPa]** | 1000 | 800 | 738 | 717 |
| **Tensile Modulus [MPa]** | 1063 | 880 | 776 | 753 |
| **Tensile Strength [MPa]** | 20,5 | 17,8 | 17,2 | 17,1 |

**Testing of base and comparative resins**

RTPO resins A, B, C and D were initially obtained in powder form.

The resins together with 10 wt% Tital15 (talc from Ankerport), 3,0 wt% Plasblack PE4103 (Carbonblack from

Cabot), 0,10 wt% ESA (Slip agent; Erucamide (IUPAC name: Z-docos-13-enamide) from Ciba), 0,10 wt% GMS (Antistatic agent, Faci), and 0,40 wt% Tinuvin 791 (UV stabilizer, Ciba Speciality Chemicals) were then pelletized by feeding the blend to a Prism 24twin-screw extruder (Prism Ltd., Staffordshire, UK). The polymer was extruded through a strand die, cooled and chopped to form pellets.

**Table 2: Properties of compounded RTPOs**

| **Base resin** | **A** | **B** | **C** | **D** |
|---|---|---|---|---|
| **MFR 230°C/2,16kg [g/10']** | 13 | 13,2 | 9,2 | 11,2 |
| **Flexural Modulus [MPa]** | 1449 | 1400 | 1199 | 1250 |
| **Tensile Modulus [MPa]** | 1427 | 1420 | 1242 | 1220 |
| **Flexural stress at 3,5% strain[MPa]** | 25,7 | 24,6 | 21,4 | 21,8 |

**Sample preparation:**

The materials were prepared on a Prism 24twin-screw extruder (Prism Ltd., Staffordshire, UK). The maximum temperature of the melt was set to 240°C. The following conditions for the injection molding of test panels (80mm x150mm x 2mm) were used: melt temperature = 240°C, mold temperature = 50°C, and melt flow = 16 $cm^3$/s.

The test panels were painted in a usual way with a standard laboratory painting process, which was composed of three consecutive steps (Power wash process, flame pre-treatment and painting process) and performed according Borealis QM work instructions (QMAA 3-430-00, available from Borealis).The panels were first purified in a simulated power wash process (pH 10, 30 bar, 30°C). After being washed with desalinated water the panels were dried at room temperature.

A burner by Herbert Arnold GmbH (Arnold Co., Germany), with propane as the burner gas was used for the activation of the panel surface. A propane/air ratio of 25 was adjusted for the flame pretreatment. The panels were pulled ahead on a skid with 0.67m/s and a distance from the flame of 10cm.

A three-component paint system available from Wörwag, Germany, was applied for painting consisting of a primer, a base coat paint and a clear coat.

The primer consisted of 2 components: Wörwag 2K-Hydroprimer and Wörupur - hardener (mixing ration 100: 10; drying for 15 minutes at 80°C). As base coat paint Wörwag-Hydrobasislack Brillantsilber was used (drying for 10 minutes at 70°C. The clear coat consisted of 3 components: Wörwag - clear coat, Wöropur - hardener and Wörupur - paint thinner ($1^{st}$ mixing ratio clear coat: paint thinner = 100:45; $2^{nd}$ mixture of first step:hardener = 100:30; drying for 45 minutes at 80°C).

After painting the test panels were dried for 3 days at 50°C.

Afterwards the painted test panels were scratched with an Erichsen Hand-Normritzer and a pre-fabricated scratch template as shown in Figure 1 was obtained.

**Adhesion test:**

For the adhesion characterization, a vapor jet test (Daimler Dampfstrahltest DBL 5416; available for example online via DaimlerChrysler Supplier Portal or Daimler Engineering Portal) was carried out.

A steam of hot water with temperature T was directed for time t at distance d under angle $\alpha$ to the surface of the test panel. Pressure p was determined by the type of nozzle installed at the end of the water pipe.

The following parameters were used:

T (water) = 60°C; t = 60 s; d = 100mm, $\alpha$ = 90°, p = 68 bar, nozzle type = MPEG 2506.

The adhesion level was assessed by a number between 0 (no failure to the coating) and 4 (a large area of destruction of the lacquer layer)

For each RTPO compound 10 panels (size 80mm x150mm x 2mm) have been tested. The panels were produced by injection moulding with 240°C melt temperature and 50°C mould temperature. The flow front velocity was 100mm/s respectively 800mm/s, so from each RTPO compound 5 panels were produced with 100mm/s and 5 panels with 800mm/s flow front velocity, but melt and mould temperature were the same for each panel.

On each panel 5 certain points were used to judge the paintability failure in [%]. (e.g. 5 panels for each RTPO, produced at a flow front velocity of 100 mm/s, were tested, so there were 25 points in total. If 5 points failed, the failure rate was 20%)

**Paintability failure taken from Figure 2:**

| Base polymer | A | B | C | D |
|---|---|---|---|---|
| 100mm/s [%] | 8 | 0 | 0 | 92 |
| 800mm/s [%] | 68 | 28 | 0 | 92 |

**Surface quality (Tigerskin):**

Plaques of a dimension of $210x149x3mm^3$, grained with VW grain K50, were produced under following conditions:

Melt temperature: 240°C
Mould temperature: 30°C
Dynamic pressure: 10 bar hydraulic

The filmgate over the whole width had a thickness of 1,4mm.
With the above mentioned conditions 5 plaques with different injection speed were produced. The test series were done with following screw advance velocities: 10, 20, 42, 60, 75 mm/sec, where the screw diameter was 50mm and different injection times of 8, 4, 2, 1.5 and 1 sec.
The produced plaques are judged visually by a tester in terms of tigerskin.
The tigerskin level was assessed by a number between 0 (no flow mark "excellent) and 5 (a large area of flow marks, "insufficient) according to Figure 3.

Table 3: Tigerskin level:

| Injection time [sec] | 8 | 4 | 2 | 1.5 | 1 |
|---|---|---|---|---|---|
| **Base polymer A** | 0 | 0 | 1 | 1 | 3 |
| **Base polymer B** | 0 | 0 | 1 | 2 | 3 |
| **Comparative D** | 0 | 1 | 5 | 5 | 5 |

Result: With the base resins A and B the surface quality has significantly improved compared to comparative resin D. (see Figure 3)

## Claims

1. Use of a Ziegler-Natta procatalyst which contains a trans-esterification product of a lower alcohol and a phthalic ester for the production of reactor grade thermoplastic polyolefins with improved paintability, **characterized in that** the procatalyst used has been prepared by

    a) reacting a spray crystallized or emulsion solidified adduct of $MgCl_2$ and a $C_1$-$C_2$ alcohol with $TiCl_4$
    b) reacting the product of stage a) with a dialkylphthalate of formula (I)

    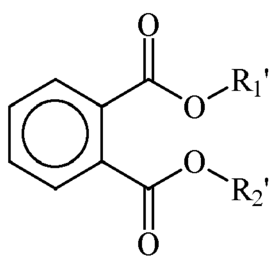
    (I)

    wherein $R_1$' and $R_2$' are independently at least a $C_5$ alkyl
    under conditions where a transesterification between said $C_1$ to $C_2$ alcohol and said dialkylphthalate of formula (I) takes place to form the internal donor

c) washing the product of stage b) or
d) optionally reacting the product of step c) with $TiCl_4$.

2. Use according to claim 1, **characterized in that** a dialkylphthalate of formula (I) selected from the group consisting of propylhexylphthalate, dioctylphthalate, di-iso-decylphthalate, and ditridecylphthalate is reacted with the product of stage a)

3. Use according to claim 2, **characterized in that** the dialkylphthalate of formula (I) is dioctylphthalate.

4. Use according to any of claims 1 to 3, **characterized in that** in step b) at a temperature between 130 to 150 °C such that said $C_1$ to $C_2$ alcohol is transesterified with the ester groups of said dialkylphthalate of formula (I) to form at least 80 mol-% of a dialkylphthalate of formula (II)

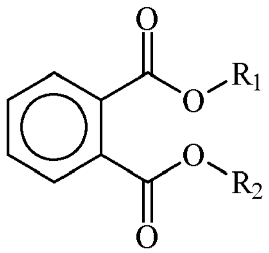

(II)

with $R_1$ and $R_2$ being methyl or ethyl being the internal donor.

5. Use according to any of claims 1 to 4, **characterized in that** the $C_1$ to $C_2$ alcohol is ethanol

6. Use according to any of claims 1 to 5 **characterized in that** the Ziegler-Natta procatalyst is the BC-1 catalyst of Borealis.

7. Use according to any of claims 1 to 6, **characterized in that** the Ziegler-Natta procatalyst is used in the presence of an organometallic cocatalyst select from the group consisting of trialkylaluminium, dialkyl aluminium chloride and alkyl aluminium sesquichloride.

8. Use according to claim 1 to 7, **characterized in that** the cocatalyst is triethylaluminium.

9. Use according to any of claims 1 to 8, **characterized in that** the Ziegler-Natta procatalyst is used in the presence of an external donor of the formula III

$$R_3nR_4mSi(OR_5)Z \qquad (III)$$

wherein $R_3$ and $R_4$ are identical or different hydrocarbon residues, selected from the group consisting of methyl, ethyl, propyl, butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl;
$R_5$ is methyl or ethyl; z is 2 or 3, m is 0 or ; n is 0 or 1; with the proviso that n + m +z = 4.

10. Use according to claims 9, **characterized in that** the external donor is selected from the group of di-iso-propyldiethoxysilane, cyclohexylmethyldiethoxysilane, dicyclopentyldimethoxysilane, cyclohexylmethyl-dimethoxysilane and dicyclopentadienyldiethoxysilane.

11. Use according to any of claims 1 to 10, **characterized in that** the Ziegler-Natta procatalyst is used in the presence of dicyclopentyldimethoxysilane as external donor and triethylaluminium as cocatalyst, whereby the dialkylphtalat of formula (I) of the Ziegler-Natta procatalyst is a dioctylphtalat and the alcohol is ethanol.

12. Use according to any of claims 1 to 11, **characterized in that** the Ziegler-Natta procatalyst is optionally modified by polymerising a vinyl compound in the presence of the catalyst system, comprising the Ziegler-Natta procatalyst, an external donor and optionally a cocatalyst, which vinyl compound has the formula:

$CH_2=CH-CHR_6R_7$

wherein $R_6$ and $R_7$ together form a 5- or 6-membered saturated, unsaturated or aromatic ring or independently represent an alkyl group comprising 1 to 4 carbon atoms.

**13.** Reactor grade thermoplastic polyolefins with improved paintability, prepared by using a Ziegler-Natta procatalyst which contains a trans-esterification product of a lower alcohol and a phthalic ester according to any of claims 1 to 12.

**14.** Reactor grade thermoplastic polyolefins with improved paintability according to claim 13, comprising from 80 to about 50 wt% polypropylene matrix having dispersed therein from 20 to 50 wt% rubber component, based on the combined weight of matrix and rubber, said rubber component comprising an ethylene-propylene copolymer having an ethylene content in the range of from about 10 to 70 wt%, based on the combined weight of olefin monomers in the rubber component.

**15.** Reactor grade thermoplastic polyolefins with improved paintability according to claim 13 or 14, comprising a polypropylene matrix with XS $\leq$ 3.

**16.** Reactor grade thermoplastic polyolefins with improved paintability according to any of claims 13 to 14, **characterized in that** they are produced in a multistage process, comprising either a combination of one loop and two or three gas phase reactors or a combination of two loops and one or two gas phase reactors.

**17.** Reactor grade thermoplastic polyolefins with improved paintability according to any of claims 13 to 16, **characterized in that** they are produced in a multistage process, comprising the steps of:

- producing a polypropylene polymer matrix in the presence of a catalyst system according to any of claims 1-12, comprising the Ziegler-Natta procatalyst, an external donor and optionally the cocatalyst in at least one slurry reactor
- transferring the slurry reactor product into a gas phase reactor
- producing a first ethylene/propylene-copolymer in the polymer matrix in the presence of the catalyst system in said first gas phase reactor
- transferring the first gas phase reactor product into a $2^{nd}$ gas phase reactor
- producing a second ethylene/propylene-copolymer in the polymer matrix in the presence of the catalyst system in said $2^{nd}$ GPR
- recovering the polymer product for further processing, said $1^{st}$ and $2^{nd}$ ethylene/propylene mixtures having different composition ratios, so that a bimodal rubber composition is obtained.

**18.** Reactor grade thermoplastic polyolefins with improved paintability according to any of claims 13 to 16, **characterized in that** they are produced in a multistage process, comprising the steps of:

- producing a polypropylene polymer matrix in the presence of a catalyst system according to any of claims 1-12, comprising the Ziegler-Natta procatalyst, an external donor and optionally the cocatalyst in at least one slurry reactor
- transferring the slurry reactor product into a gas phase reactor,
- wherein the slurry reactor product is further polymerized in the presence of the catalyst system in said first gas phase reactor
- transferring the first gas phase reactor product into a $2^{nd}$ gas phase reactor
- producing a ethylene/propylene-copolymer in the polymer matrix in the presence of catalyst system in said $2^{nd}$ gas phase reactor
- optionally transferring the $2^{nd}$ gas phase reactor product into a $3^{rd}$ gas phase reactor and producing a second ethylene/propylene-copolymer in the polymer matrix in the presence of catalyst system in said $3^{rd}$ gas phase reactor, said $1^{st}$ and $2^{nd}$ ethylene/propylene mixtures having different composition ratios and
- recovering the polymer product for further processing,

yielding a polypropylene polymer matrix containing a unimodal rubber composition if 2 gas phase reactors are used or containing a bimodal rubber composition if 3 gas phase reactors are used.

**19.** Reactor grade thermoplastic polyolefins with improved paintability according to any of claims 13 to 18, **characterized**

**in that** they further show improved surface quality.

**20.** Use of reactor grade thermoplastic polyolefins with improved paintability according to any of claims 13 to 19 for the production of moulded articles.

**21.** Use of reactor grade thermoplastic polyolefins with improved paintability according to claim 20 for the production of injection moulded articles for automotive parts.

**22.** Method for improving paintability and/or surface quality of reactor grade thermoplastic polyolefin resin articles, the method comprising providing an article molded from a reactor grade thermoplastic polyolefin resin, produced in the presence of the Ziegler-Natta procatalyst according to any of claims 1 to 12.

**23.** Moulded articles produced by the reactor grade thermoplastic polyolefins according to any of claims 13-19.

Figure 1: scratch template for adhesion test

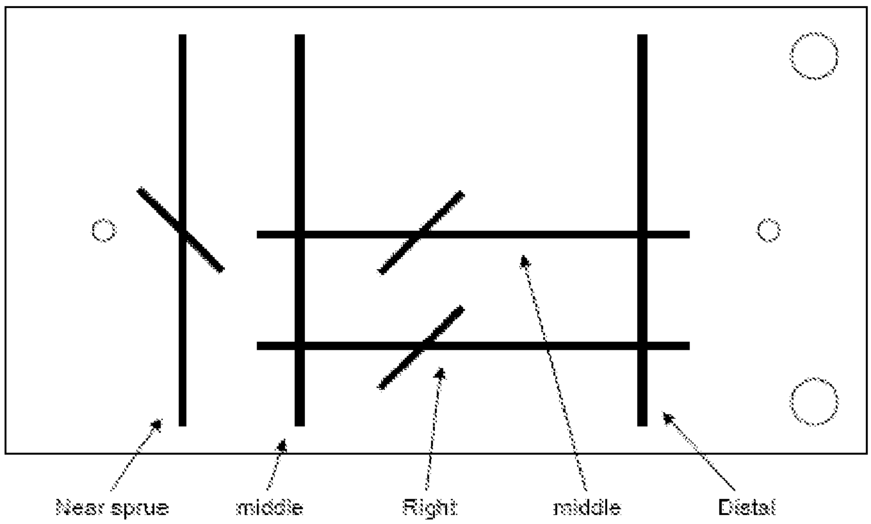

Figure 2: Paintability failure

**Steamjet test on painted plaques produced with a flow front velocity of 100mm/s**

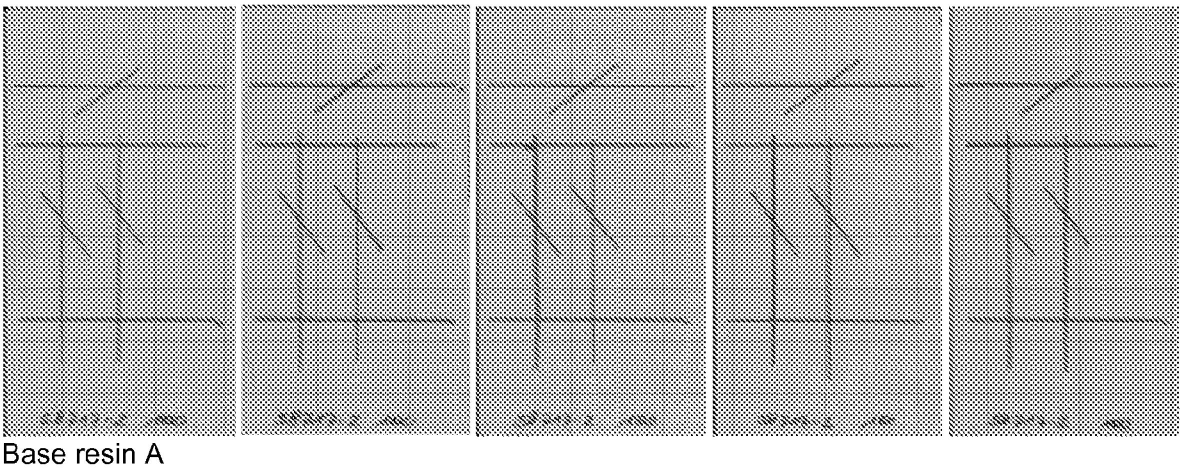

Base resin A

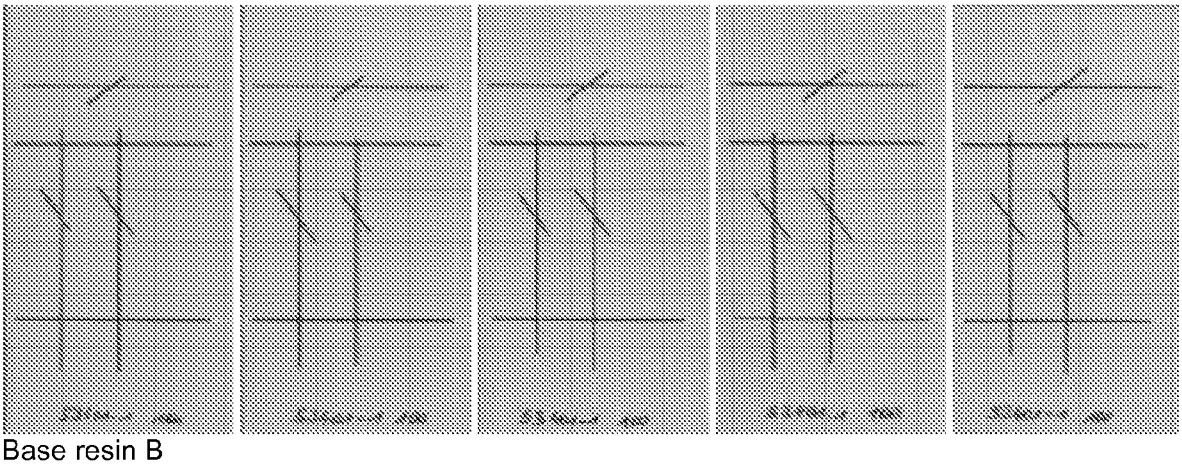

Base resin B

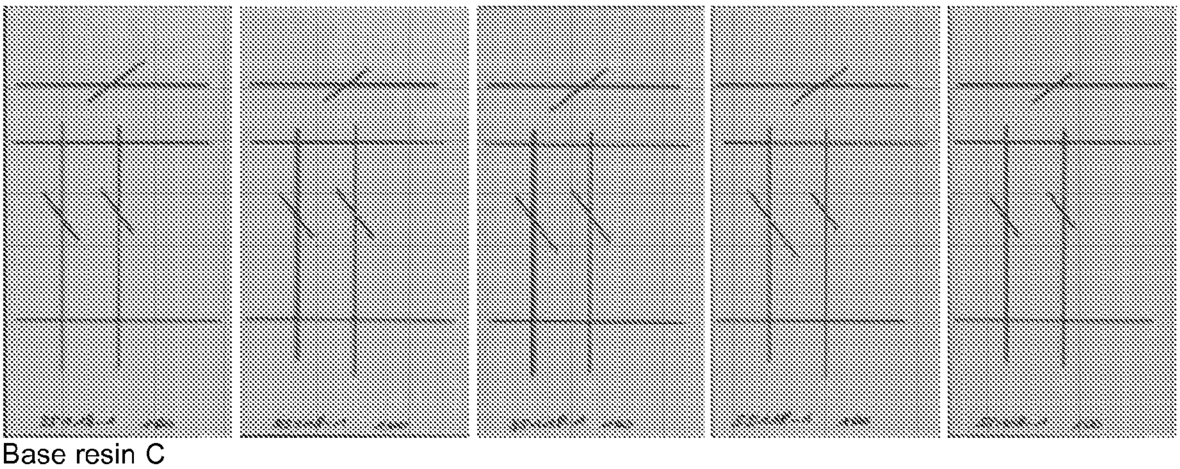

Base resin C

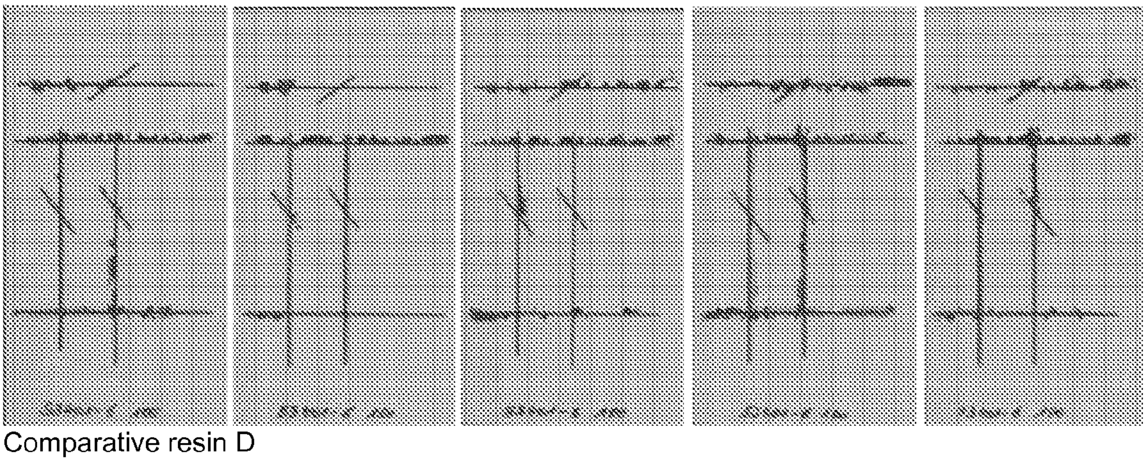

Comparative resin D

## Steamjet test on painted plaques produced with a flow front velocity of 800mm/s

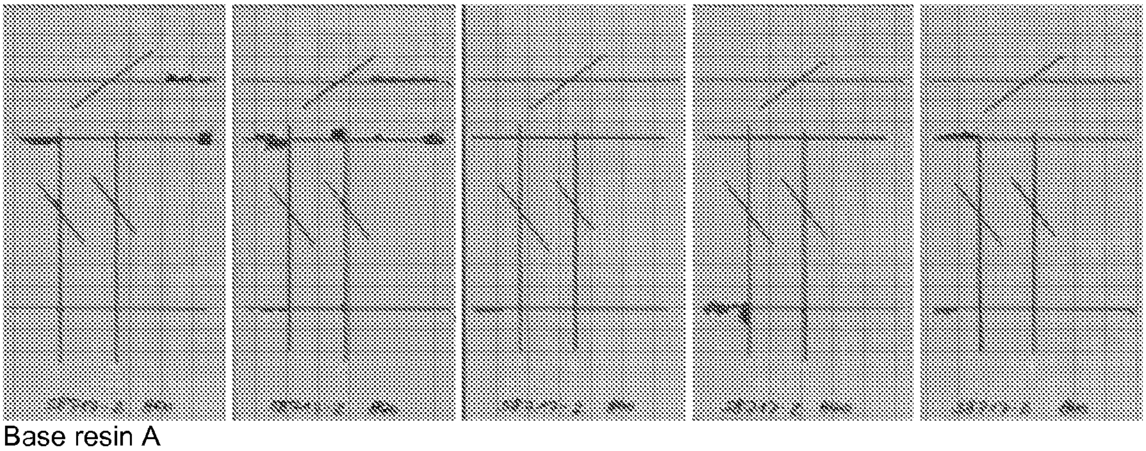

Base resin A

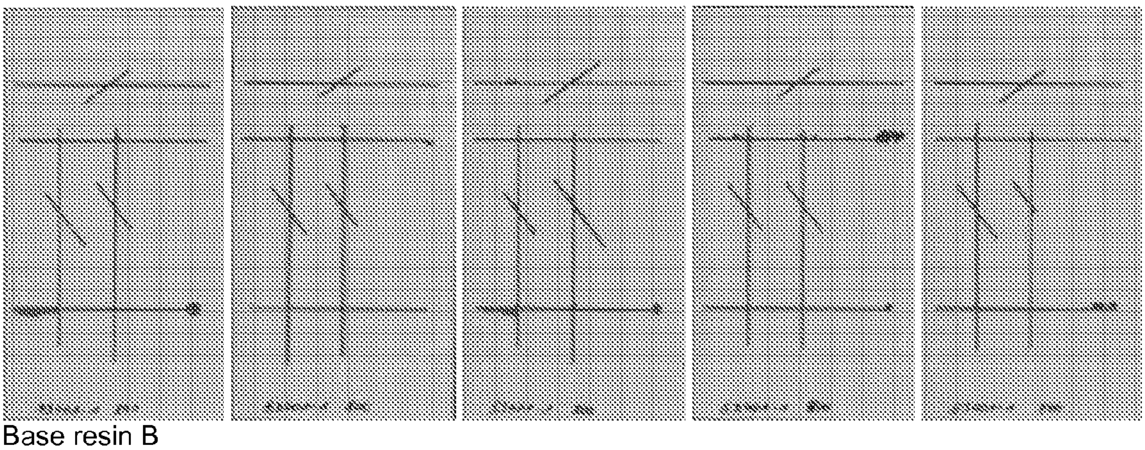

Base resin B

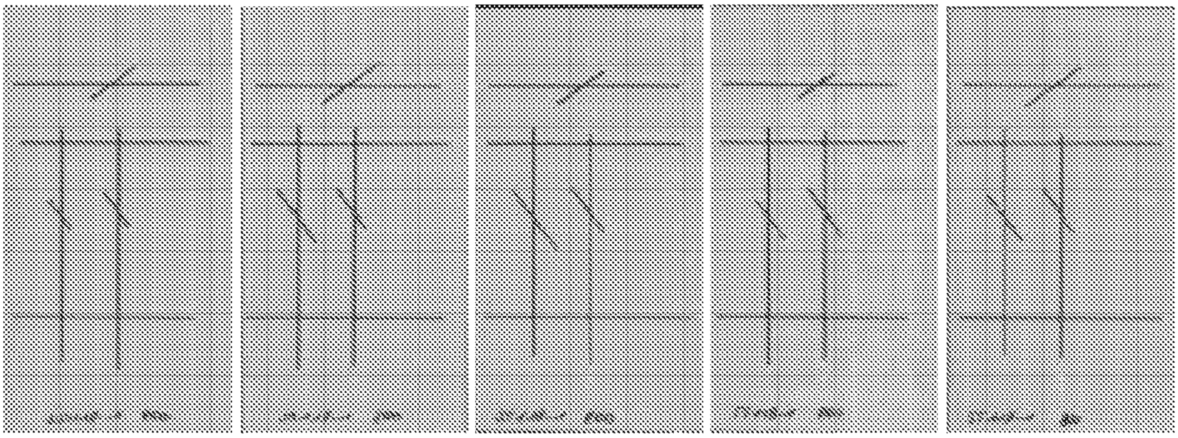

Base resin C

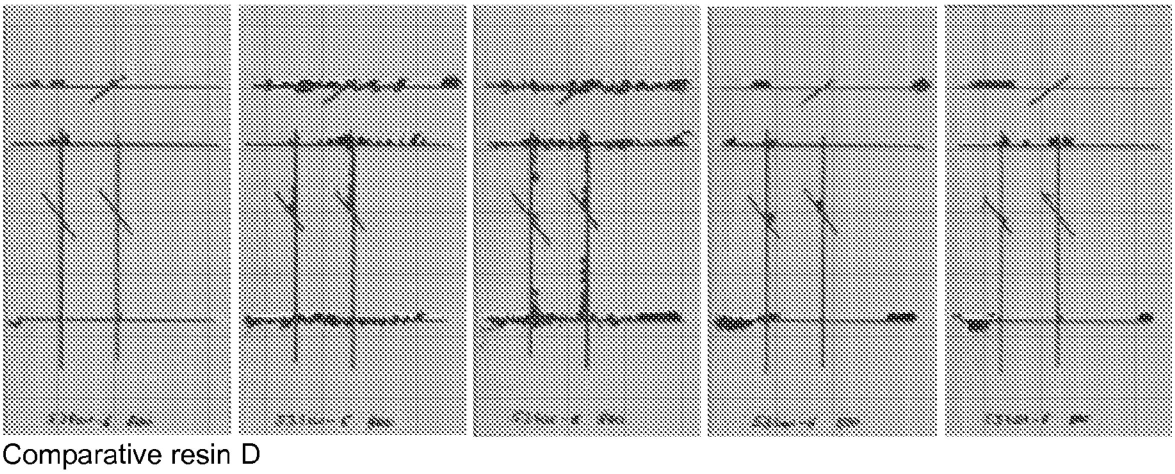

Comparative resin D

## Figure 3: Surface quality

## Tigerskin

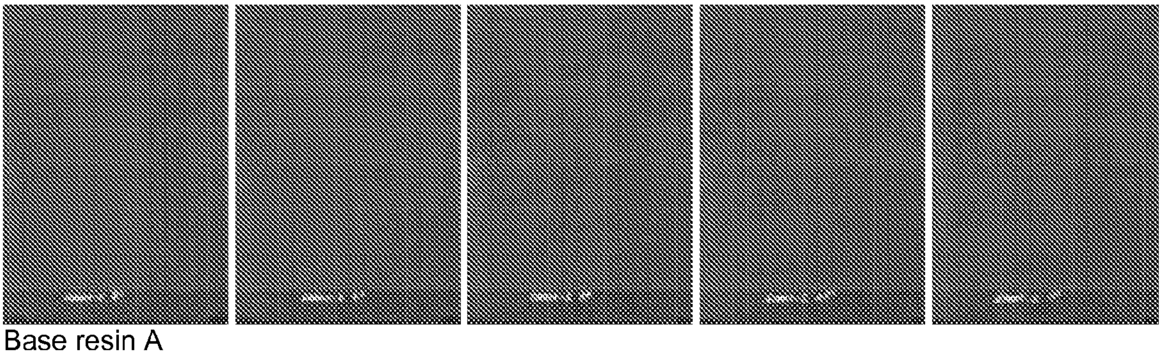

Base resin A

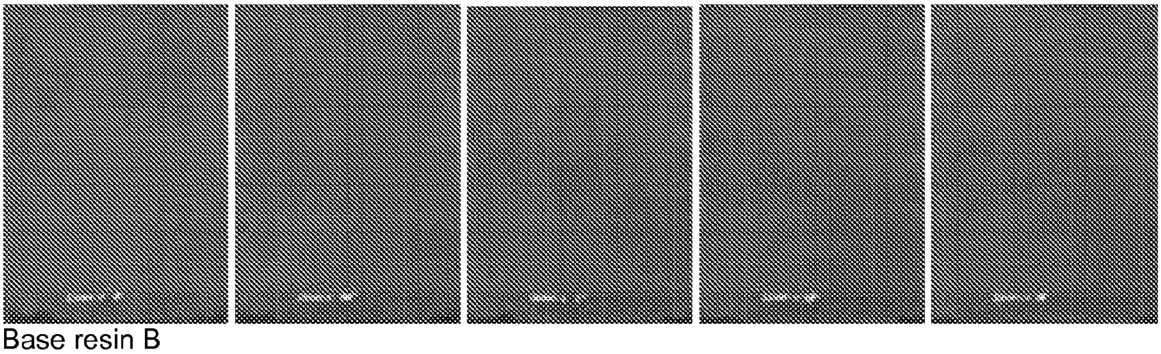

Base resin B

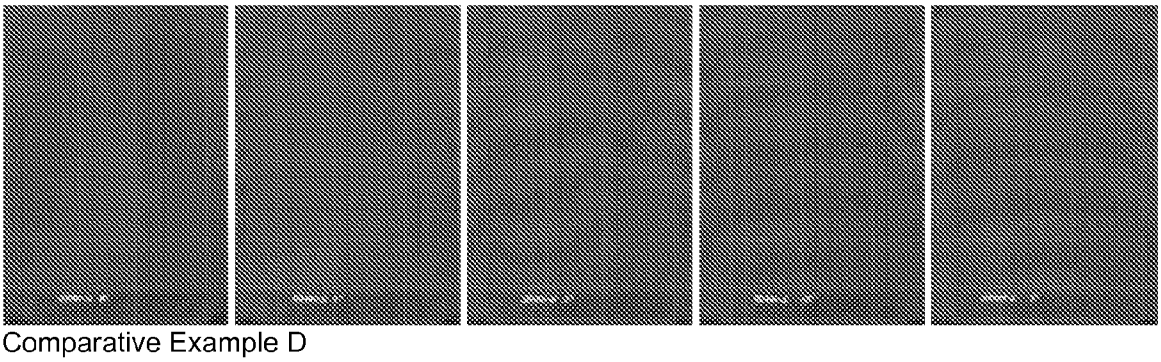

Comparative Example D

European Patent Office

# EUROPEAN SEARCH REPORT

Application Number
EP 07 12 2450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 98/12234 A (BOREALIS POLYMERS OY [FI]; GAROFF THOMAS [FI]; LEINONEN TIMO [FI]; ALA) 26 March 1998 (1998-03-26)<br>* page 20 - page 31 *<br>----- | 1-10, 12-22 | INV.<br>C08F10/06<br>C08F4/651 |
| D,X | EP 0 491 566 A (NESTE OY [FI] BOREALIS AS [DK]) 24 June 1992 (1992-06-24)<br>* page 4, line 14 - line 36 *<br>* page 5 - page 7 *<br>* claims 1,7 *<br>----- | 1-8, 12-19 | |
| X | EP 0 627 449 A (NESTE OY [FI]) 7 December 1994 (1994-12-07)<br>* page 4 - page 7 *<br>----- | 1-8, 12-19 | |
| D,X | WO 92/19658 A (NESTE OY [FI]) 12 November 1992 (1992-11-12)<br>* page 9 - page 22 *<br>----- | 1-8, 12-19 | |
| X | WO 92/19659 A (NESTE OY [FI]) 12 November 1992 (1992-11-12)<br>* page 10 - page 21 *<br>----- | 1-8, 12-19 | TECHNICAL FIELDS SEARCHED (IPC) |
| D,X | WO 92/19653 A (NESTE OY [FI]) 12 November 1992 (1992-11-12)<br>* page 9 - page 20 *<br>----- | 1-8, 12-19 | C08F |
| X | WO 97/36938 A (BOREALIS AS [DK]; GAROFF THOMAS [FI]; LEINONEN TIMO [FI]; ALA HUIKKU S) 9 October 1997 (1997-10-09)<br>* page 9 - page 26 *<br>----- | 1-8, 12-19 | |
| A | WO 02/16681 A (EXXONMOBIL CHEM PATENTS INC [US]; RICHESON GALEN C [US]) 28 February 2002 (2002-02-28)<br>* page 5, line 1 - line 5 *<br>----- | 1-23 | |
| | -/-- | | |

The present search report has been drawn up for all claims

| Place of search | Date of completion of the search | Examiner |
|---|---|---|
| The Hague | 27 August 2008 | Parry, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 07 12 2450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE CA [Online] CHEMICAL ABSTRACTS SERVICE, COLUMBUS, OHIO, US; TANAKA, EIJI ET AL: "Manufacture of rigid and impact-resistant propylene polymer-based compositions" XP002479600 retrieved from STN Database accession no. 1997:784255 * abstract * & JP 09 316146 A (MITSUBISHI CHEMICAL INDUSTRIES LTD., JAPAN) 9 December 1997 (1997-12-09) ----- | 1-5,7-9, 12-19 | |
| X | THANYAPRUEKSANON, SATIT ET AL: "New synthesis methods for polypropylene-co-ethylene-propylene rubber" JOURNAL OF APPLIED POLYMER SCIENCE , 103(6), 3609-3616 CODEN: JAPNAB; ISSN: 0021-8995, 2007, XP008091133 * the whole document * ----- | 1-5,7,8, 12-23 | TECHNICAL FIELDS SEARCHED (IPC) |
| X | DATABASE CA [Online] CHEMICAL ABSTRACTS SERVICE, COLUMBUS, OHIO, US; DONG, JINYONG ET AL: "Producing polypropylene alloy with mixture of metallocene and Ziegler-Natta catalyst" XP002479599 retrieved from STN Database accession no. 2007:675749 * abstract * & CN 1 982 341 A (PETROCHINA CO., LTD., PEOP. REP. CHINA; INSTITUTE OF CHEMISTRY, CHINES) 20 June 2007 (2007-06-20) ----- | 1-5,7,8, 12-19 | |
| | -/-- | | |

The present search report has been drawn up for all claims

| Place of search | Date of completion of the search | Examiner |
|---|---|---|
| The Hague | 27 August 2008 | Parry, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 07 12 2450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE CA [Online] CHEMICAL ABSTRACTS SERVICE, COLUMBUS, OHIO, US; WANG, ZHIWU ET AL: "Catalyst component for olefin polymerization or copolymerization and olefin polymerization therewith" XP002479598 retrieved from STN Database accession no. 2007:762085 * abstract * & WO 2007/076639 A1 (CHINA PETROLEUM & CHEMICAL CORPORATION, PEOP. REP. CHINA; BEIJING RESE) 12 July 2007 (2007-07-12) ----- | 1-5,7-19 | |
| X | DATABASE CA [Online] CHEMICAL ABSTRACTS SERVICE, COLUMBUS, OHIO, US; NIU, HUI ET AL: "Method for preparing composite metal catalyst for olefin polymerization" XP002479597 retrieved from STN Database accession no. 2007:1133797 * abstract * & CN 101 045 760 A (INSTITUTE OF CHEMISTRY, CHINESE ACADEMY OF SCIENCES, PEOP. REP. CHINA) 3 October 2007 (2007-10-03) ----- | 1-5, 12-19 | TECHNICAL FIELDS SEARCHED (IPC) |
| X | EP 0 685 497 A (BOREALIS HOLDING AS [DK] BOREALIS AS [DK]) 6 December 1995 (1995-12-06) * page 8, line 56 - page 9, line 25; table 4 * ----- | 1-19 | |

-/--

The present search report has been drawn up for all claims

| Place of search | Date of completion of the search | Examiner |
|---|---|---|
| The Hague | 27 August 2008 | Parry, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 07 12 2450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 97/36939 A (BOREALIS AS [DK]; GAROFF THOMAS [FI]; LEINONEN TIMO [FI]; ALA HUIKKU S) 9 October 1997 (1997-10-09)<br>* page 13, line 22 - page 15, line 20 *<br>----- | 13-19 | |
| | | | TECHNICAL FIELDS SEARCHED (IPC) |

The present search report has been drawn up for all claims

| Place of search | Date of completion of the search | Examiner |
|---|---|---|
| The Hague | 27 August 2008 | Parry, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

Application Number
EP 07 12 2450

## CLAIMS INCURRING FEES

The present European patent application comprised at the time of filing claims for which payment was due.

- [ ] Only part of the claims have been paid within the prescribed time limit. The present European search report has been drawn up for those claims for which no payment was due and for those claims for which claims fees have been paid, namely claim(s):

- [ ] No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

- [X] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [ ] None of the further search fees have been paid within the fixed time limit. The present European search report has been drawn up for those parts of the European patent application which relate to the invention first mentioned in the claims, namely claims:

- [ ] The present supplementary European search report has been drawn up for those parts of the European patent application which relate to the invention first mentioned in the claims (Rule 164 (1) EPC).

European Patent Office

# LACK OF UNITY OF INVENTION SHEET B

Application Number
EP 07 12 2450

The Search Division considers that the present European patent application does not comply with the requirements of unity of invention and relates to several inventions or groups of inventions, namely:

1. claims: 1-13,15,16,19-23 (in part)

   The subject matter of claims 1-13,15,16,19-23 (in part), excluding the subject matter of invention 2

   ---

2. claims: 1-13,15,16,19-23 (in part) and 14,17,18 (in full)

   1-13,15,16,19-23 (in part) and 14,17,18 (in full) insofar as it relates to propylene copolymers

   ---

## ANNEX TO THE EUROPEAN SEARCH REPORT ON EUROPEAN PATENT APPLICATION NO. EP 07 12 2450

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2008

| Patent document cited in search report | Publication date | Patent family member(s) | Publication date |
|---|---|---|---|
| WO 9812234 A | 26-03-1998 | AT 234871 T | 15-04-2003 |
| | | AU 730744 B2 | 15-03-2001 |
| | | AU 4386097 A | 14-04-1998 |
| | | BR 9713468 A | 04-04-2000 |
| | | CA 2263660 A1 | 26-03-1998 |
| | | CN 1230968 A | 06-10-1999 |
| | | CZ 9900813 A3 | 11-08-1999 |
| | | DE 69720010 D1 | 24-04-2003 |
| | | DE 69720010 T2 | 24-12-2003 |
| | | EP 0927202 A1 | 07-07-1999 |
| | | ES 2195173 T3 | 01-12-2003 |
| | | JP 2001503079 T | 06-03-2001 |
| | | KR 20000036218 A | 26-06-2000 |
| | | PL 333375 A1 | 06-12-1999 |
| | | US 6288180 B1 | 11-09-2001 |
| EP 0491566 A | 24-06-1992 | AT 143675 T | 15-10-1996 |
| | | CA 2056531 A1 | 20-06-1992 |
| | | DE 69122483 D1 | 07-11-1996 |
| | | DE 69122483 T2 | 06-02-1997 |
| | | ES 2094798 T3 | 01-02-1997 |
| | | FI 906282 A | 20-06-1992 |
| | | JP 2559084 B2 | 27-11-1996 |
| | | JP 4296305 A | 20-10-1992 |
| | | NO 915000 A | 22-06-1992 |
| EP 0627449 A | 07-12-1994 | CA 2125126 A1 | 05-12-1994 |
| | | FI 932580 A | 05-12-1994 |
| | | JP 7145205 A | 06-06-1995 |
| | | NO 942056 A | 05-12-1994 |
| WO 9219658 A | 12-11-1992 | CA 2102306 A1 | 10-11-1992 |
| | | DE 69220058 D1 | 03-07-1997 |
| | | DE 69220058 T2 | 02-10-1997 |
| | | EP 0586390 A1 | 16-03-1994 |
| | | FI 88048 B | 15-12-1992 |
| | | NO 934041 A | 08-11-1993 |
| WO 9219659 A | 12-11-1992 | CA 2109210 A1 | 10-11-1992 |
| | | DE 69223051 D1 | 11-12-1997 |
| | | DE 69223051 T2 | 26-02-1998 |
| | | EP 0586389 A1 | 16-03-1994 |
| | | FI 88049 B | 15-12-1992 |
| | | NO 934042 A | 17-12-1993 |
| WO 9219653 A | 12-11-1992 | CA 2102816 A1 | 10-11-1992 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 07 12 2450

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2008

| Patent document cited in search report | Publication date | Patent family member(s) | Publication date |
|---|---|---|---|
| WO 9219653 A | | DE 69224435 D1 | 19-03-1998 |
| | | DE 69224435 T2 | 24-09-1998 |
| | | EP 0591224 A1 | 13-04-1994 |
| | | FI 88047 B | 15-12-1992 |
| | | JP 3226538 B2 | 05-11-2001 |
| | | JP 6511501 T | 22-12-1994 |
| | | NO 933962 A | 02-11-1993 |
| | | US 6303532 B1 | 16-10-2001 |
| WO 9736938 A | 09-10-1997 | AT 205859 T | 15-10-2001 |
| | | AT 204302 T | 15-09-2001 |
| | | AU 2162497 A | 22-10-1997 |
| | | AU 2162597 A | 22-10-1997 |
| | | BR 9708400 A | 03-08-1999 |
| | | BR 9709159 A | 03-08-1999 |
| | | CN 1215410 A | 28-04-1999 |
| | | CN 1216997 A | 19-05-1999 |
| | | DE 69706153 D1 | 20-09-2001 |
| | | DE 69706153 T2 | 02-05-2002 |
| | | DE 69706839 D1 | 25-10-2001 |
| | | EP 0889914 A1 | 13-01-1999 |
| | | EP 0889915 A1 | 13-01-1999 |
| | | FI 961457 A | 30-09-1997 |
| | | WO 9736939 A1 | 09-10-1997 |
| | | TW 494110 B | 11-07-2002 |
| | | US 6207607 B1 | 27-03-2001 |
| | | US 6200923 B1 | 13-03-2001 |
| | | ZA 9702727 A | 23-10-1997 |
| WO 0216681 A | 28-02-2002 | AT 353379 T | 15-02-2007 |
| | | CA 2420052 A1 | 28-02-2002 |
| | | CA 2420072 A1 | 28-02-2002 |
| | | CA 2420465 A1 | 28-02-2002 |
| | | DE 60126497 T2 | 29-11-2007 |
| | | EP 1313782 A1 | 28-05-2003 |
| | | EP 1311593 A2 | 21-05-2003 |
| | | EP 1315858 A1 | 04-06-2003 |
| | | JP 2004506788 T | 04-03-2004 |
| | | JP 2004506798 T | 04-03-2004 |
| | | JP 2004507625 T | 11-03-2004 |
| | | MX PA03001585 A | 14-07-2003 |
| | | MX PA03001586 A | 18-03-2004 |
| | | MX PA03001587 A | 10-09-2003 |
| | | WO 0216455 A1 | 28-02-2002 |
| | | WO 0216480 A2 | 28-02-2002 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 07 12 2450

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2008

| Patent document cited in search report | Publication date | Patent family member(s) | Publication date |
|---|---|---|---|
| | | US 2004171782 A1 | 02-09-2004 |
| JP 9316146 A | 09-12-1997 | NONE | |
| CN 1982341 A | 20-06-2007 | NONE | |
| WO 2007076639 A1 | 12-07-2007 | EP 1970388 A1 | 17-09-2008 |
| CN 101045760 A | 03-10-2007 | NONE | |
| EP 0685497 A | 06-12-1995 | AT 186308 T | 15-11-1999 |
| | | AU 686813 B2 | 12-02-1998 |
| | | AU 2568495 A | 21-12-1995 |
| | | CA 2191758 A1 | 07-12-1995 |
| | | CN 1149878 A | 14-05-1997 |
| | | DE 69513084 D1 | 09-12-1999 |
| | | DE 69513084 T2 | 17-02-2000 |
| | | FI 942536 A | 01-12-1995 |
| | | WO 9532994 A1 | 07-12-1995 |
| | | JP 10501016 T | 27-01-1998 |
| WO 9736939 A | 09-10-1997 | AT 205859 T | 15-10-2001 |
| | | AT 204302 T | 15-09-2001 |
| | | AU 2162497 A | 22-10-1997 |
| | | AU 2162597 A | 22-10-1997 |
| | | BR 9708400 A | 03-08-1999 |
| | | BR 9709159 A | 03-08-1999 |
| | | CN 1215410 A | 28-04-1999 |
| | | CN 1216997 A | 19-05-1999 |
| | | DE 69706153 D1 | 20-09-2001 |
| | | DE 69706153 T2 | 02-05-2002 |
| | | DE 69706839 D1 | 25-10-2001 |
| | | EP 0889914 A1 | 13-01-1999 |
| | | EP 0889915 A1 | 13-01-1999 |
| | | FI 961457 A | 30-09-1997 |
| | | WO 9736938 A1 | 09-10-1997 |
| | | TW 494110 B | 11-07-2002 |
| | | US 6207607 B1 | 27-03-2001 |
| | | US 6200923 B1 | 13-03-2001 |
| | | ZA 9702727 A | 23-10-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6284833 B
- US 20050075458 A
- US 6107404 A
- US 4127504 A
- US 4330649 A
- US 4543400 A
- US 4547522 A
- US 6610408 B
- WO 8707620 A
- WO 9219653 A
- WO 9219658 A
- EP 0491566 A
- WO 9924479 A
- EP 0491566 A2
- WO 9924478 A
- WO 0068315 A
- EP 0887379 A1
- WO 2004000899 A
- WO 2004111095 A
- WO 9924501 A
- EP 0591224 A